# EUROPEAN PATENT APPLICATION

(11) **EP 4 521 528 A1**
(43) Date of publication of application: **12.03.2025**
(21) Application number: 23811933.3
(22) Date of filing: 27.01.2023
(51) Int. Cl.: H01M 50/242, H01M 50/211, H01M 50/249, H01M 50/591

(54) **BATTERY MODULE HOUSING FOR ACCOMMODATING BATTERY CELL STACK**

(30) Priority: 27.05.2022 KR 20220065622
(71) Applicant: LG Energy Solution, Ltd., Seoul 07335 (KR)
(72) Inventor: CHA, In Seok, Daejeon 34122 (KR)
(74) Representative: Plasseraud IP
(86) International application number: PCT/KR2023/001281
(87) International publication number: WO 2023/229145

(57) **Abstract**

The present invention relates to a housing configured to accommodate a battery cell stack of a battery module, and more particularly, provides a frame that is included in the housing and includes a cut-out portion formed on an inner surface of the frame adjacent to a protruding-shaped vulnerable portion (bat-ear) provided at a corner portion of each of battery cells included in the battery cell stack to avoid interference with the protruding-shaped vulnerable portion, and a double injection-molded portion that is bonded to a machined surface of the cut-out portion by double injection, has a shape more depressed than the inner surface to cover the cut-out portion while avoiding the interference with the vulnerable portion, and is formed to constitute a portion of the inner surface, and provides a housing including the frame, a battery module including the housing, a battery pack including the battery module, a vehicle including the battery pack, and the like.

## Description

### Technical Field

This application claims the benefit of priority to Korean Patent Application No. 10-2022-0065622, filed on May 27, 2022 in the Korean Intellectual Property Office, the disclosure of which is incorporated herein by reference in its entirety.

The present invention relates to a battery module housing for accommodating a battery cell stack, and more particularly, to a battery module housing having improved space utilization, insulation properties, and economic feasibility of a manufacturing process.

### Background Art

A secondary battery having electrical characteristics, such as high ease of applicability according to a product group and high energy density, has been commonly applied to electric vehicles (EV), hybrid vehicles (HV), energy storage systems, or the like which are driven by an electrical driving source, as well as portable devices. The secondary battery has received attention as a new energy source for promoting eco-friendliness and energy efficiency in that byproducts are not generated at all according to the use of energy as well as a primary advantage of dramatically reducing the use of fossil fuels.

While small mobile devices use one or two to four cells per device, medium- and large-sized devices such as automobiles require high power and large capacity. Accordingly, a medium- and large-sized battery module in which a plurality of battery cells are electrically connected is used.

The medium- and large-sized battery module is preferably manufactured in as small a size and weight as possible, and thus, a prismatic-type battery, a pouch-type battery, and the like, which can be stacked with a high degree of integration and has a small weight compared to capacity, are mainly used as a battery cell of the medium- and large-sized battery module.

Meanwhile, in order to protect a battery cell stack from external impact, heat or vibration, the battery module may include a frame member of which a front surface and a back surface are open to house the battery cell stack in an internal space.

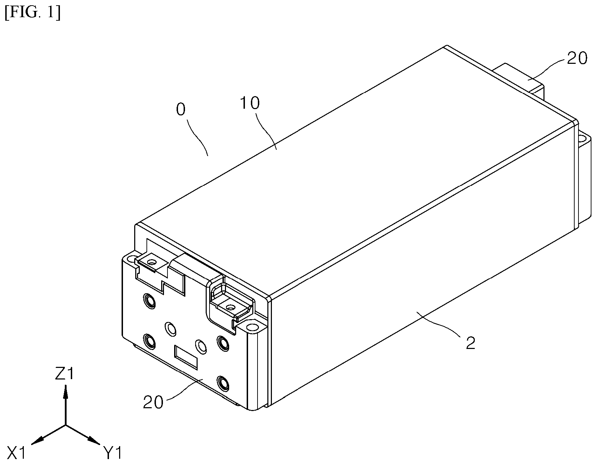

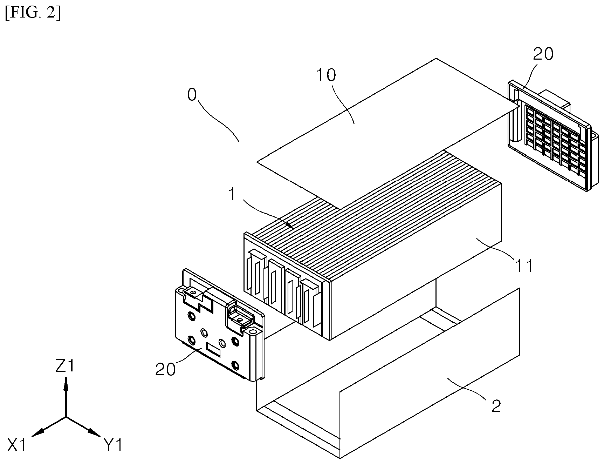

FIGS. 1 and 2 are a perspective view and an exploded perspective view, illustrating a battery module having a U-shaped frame, whose upper portion and front and rear surfaces are open, after and before assembly, respectively. Referring to these drawings, a battery module 0 having a U-shaped frame includes a battery cell stack 1 configured by stacking battery cells 11, and a housing configured to accommodate the battery cell stack 1, and the housing includes a frame 2 configured to cover a lower portion and both sides thereof in a width direction Y1, an upper plate 10 configured to cover an upper portion thereof, and a pair of end plates 20 configured to cover both sides thereof in a length direction X1. The frame 2 has a shape in which a bottom surface 21 and both sidewalls in the width direction are connected.

The battery cell stack 1 is an assembly in which a plurality of pouch-type battery cells 11 are stacked and assembled, and accommodated in the housing such that a normal line direction Z2 of each of the battery cells 11 matches the width direction of the housing.

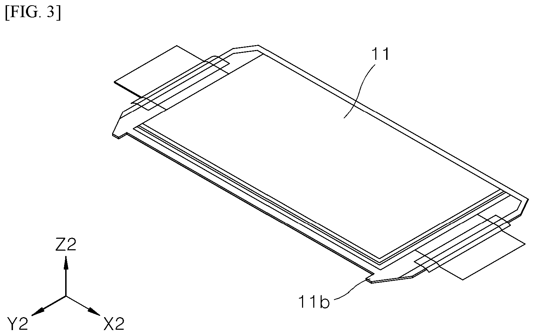

FIG. 3 is a perspective view illustrating one unit of the pouch-type battery cell 11. Referring to this, the battery cell 11 has a structure in which an electrode assembly, an electrode tab, and an electrode lead are accommodated in a pouch mainly made of a material in which both surfaces of a metal sheet are coated with an insulating material, and the electrode lead has a portion protruding to the outside of the pouch in a length direction X2. The pouch is folded with the length direction as an axis, and three surfaces except for the folded portion are thermally fused and sealed. In this case, vulnerable portions 11b extending to protrude from one end portion of the pouch, which is positioned on a side in which the folded portion is positioned, to one side in a width direction Y2 by compression are formed on both corner portions of the pouch positioned between the one end portion of the pouch in the width direction and both end portions of the pouch, which are sealed on a lead film, in the length direction, and the vulnerable portions 11b are also referred to as bat-ears. The vulnerable portion 11b has a shape protruding from the battery cell 11 toward one side in the width direction, and thus, there is a possibility of interference with an inner surface of the frame 2 during assembly of the battery module 0, and when such interference exists, there is a possibility that the sealing of the pouch is deteriorated and insulating performance is lowered. In addition, a separation distance between the battery cell stack 1 and the frame 2 increases due to the protruding shape of the vulnerable portion 11b, and thus it is necessary to thickly form a thermally conductive resin layer provided between the battery cell stack 1 and the frame 2 to assist a cooling action of the battery cell 11, which is not economical.

Meanwhile, in order to solve this problem, in the related art, it was tried to avoid interference between the vulnerable portion 11b and the frame 2 while increasing space utilization by forming a stepped portion having a height less than that of another portion of the bottom surface 21 by machining the bottom surface 21 of a portion of the frame 2, which may interfere with the vulnerable portion 11b, and prevent the insulation failure by subsequently attaching an insulating tape to the stepped portion. However, the attachment of the insulating tape is an additional work after machining the stepped portion, and thus the process is cumbersome and uneconomical, and defects may occur as the attachment is performed by a manual work.

### Disclosure

### Technical Problem

The present invention is conceived in view of the aforementioned problem of the related art, and an object thereof is to provide a battery module housing capable of securing insulating performance while reducing interference with a vulnerable portion provided on a battery cell.

Another object of the present invention is to maximize space utilization by providing a frame in a shape corresponding to a protruding shape of the vulnerable portion, and to reduce a thickness of a thermally conductive resin layer provided between a battery cell stack and the frame by reducing a separation distance between the battery cell stack and the frame, thereby ensuring economic feasibility.

Still another object of the present invention is to provide a housing that simplifies a conventional complex process of machining a stepped portion and attaching an insulating tape, and exhibits stable performance with a cost-effective process, by providing a frame that has no interference with the vulnerable portion and secures insulating performance.

Yet another object of the present invention is to reduce the possibility of defects occurring from the fact that the conventional insulating tape attaching process is a manual process.

Yet another object of the present invention is to provide a housing that is produced by the above-described economical process and exhibits reliable anti-interference performance and insulating performance, a battery module including the same, a battery pack including the battery module, and a vehicle including the battery pack.

Aspects according to the present invention are not limited to the above ones, and other aspects and advantages that are not mentioned above may be clearly understood from the following description and may be more clearly understood from the embodiments set forth herein. Additionally, the aspects and advantages in the present invention may be realized via means and combinations thereof that are described in the appended claims.

### Technical Solution

In order to achieve the above-described objects, the present invention provides a housing configured to accommodate a battery cell stack in a battery module, wherein a cut-out portion is formed by cutting out a portion that may interfere with an end portion of a vulnerable portion provided to protrude from one side of each of battery cells in a width direction, and a double injection-molded portion made of double-injected synthetic resin covers the cut-out portion.

The housing may include a U-shaped frame in which a bottom surface and both sidewalls in a width direction (Y1) are connected, an upper plate covering an upper portion, and end plates covering both sides in a length direction (X1), and the bottom surface and both sidewalls of the frame may be a single bent member or may be bonded to each other as separate members.

The frame may be made of a metal plate, and may be manufactured by plastic deformation through a press, but is not excluded from being manufactured from other materials or through other machining methods.

The cut-out portion may be formed in advance in an existing frame through press cutting, and may be formed in advance from the time of cutting a metal plate plastically deformed through a press. The cut-out portion may be formed by any method, as long as it is formed in a shape in which a portion of the frame is cut out and formed at a portion that may interfere with end portion of the vulnerable portion of the battery cell in the frame to prevent the interference.

The cut-out portion may be formed on a bottom surface of the frame.

The cut-out portion may be machined into a shape of leaving a portion of a thickness of the bottom surface of the frame and being recessed into the bottom surface, or may be cut in a shape completely penetrating the bottom surface.

The cut-out portion may be formed on one end portion or both end portions of the frame in a length direction.

The cut-out portion may be formed at one end portion of the frame in the length direction with corners at which both sidewalls and the bottom surface of the frame meet as boundaries in the width direction.

The double injection-molded portion may be made of an insulating synthetic resin.

The double injection-molded portion may be made of a synthetic resin that is both insulating and thermally conductive.

The double injection-molded portion may be bonded to a machined surface of the cut-out portion through double injection.

The double injection-molded portion may have a shape more depressed than the bottom surface of the frame on which the cut-out portion is formed. Meanwhile, a thermally conductive resin layer may be provided between the frame and the battery cell stack. A thickness of the thermally conductive resin layer may be determined according to a separation distance between the battery cell stack and the frame. When the thickness of the thermally conductive resin layer is too thick, economic feasibility is reduced, and thus, the depressed shape may be formed to have a step corresponding to the degree of protrusion of the vulnerable portion so as to reduce the separation distance.

A thickness of the double injection-molded portion may be less than, greater than, or equal to a thickness of the bottom surface.

A lower surface of the double injection-molded portion may form a step with a lower surface of the bottom surface or may be continuous without a step.

A housing according to one embodiment of the present invention includes a U-shaped frame formed by plastic deformation of a metal plate, a cut-out portion is formed at an one end portion of the frame in a length direction with both corners at which the bottom surface and both sidewalls meet as boundaries thereof in the width direction so as to penetrate the bottom surface, a double injection-molded portion is connected to a machined surface of the cut-out portion, and a thickness of the double injection-molded portion is less than a thickness of the bottom surface. A lower surface of the double injection-molded portion and a lower surface of the bottom surface have the same height and are continuous without a step, and an upper surface of the double injection-molded portion is more depressed downward than an upper surface of the bottom surface, so that the upper surface of the double injection-molded portion and the upper surface of the bottom surface are formed to generate a step.

A housing according to another embodiment of the present invention includes a U-shaped frame formed by plastic deformation of a metal plate, a cut-out portion is formed at an one end portion of the frame in a length direction with both corners at which the bottom surface and both sidewalls meet as boundaries thereof in the width direction so as to penetrate the bottom surface, a double injection-molded portion is connected to a machined surface of the cut-out portion, and a thickness of the double injection-molded portion is equal to a thickness of the bottom surface. The entire double injection-molded portion more protrudes downward than the bottom surface, so that the double injection-molded portion and both the upper and lower surfaces of the bottom surface form a step.

The double injection-molded portion may be formed to cover a portion of the bottom surface inside the machined surface of the cut-out portion.

A housing according to still another embodiment of the present invention includes a U-shaped frame formed by plastic deformation of a metal plate, a cut-out portion is formed at an one end portion of the frame in a length direction with both corners at which the bottom surface and both sidewalls meet as boundaries thereof in the width direction so as to penetrate the bottom surface, a double injection-molded portion is connected to a machined surface of the cut-out portion and a portion of the bottom surface inside the boundary of the cut-out portion, and a thickness of the double injection-molded portion is less than a thickness of the bottom surface. A lower surface of the double injection-molded portion and a lower surface of the bottom surface have the same height and are continuous without a step, and an upper surface of the double injection-molded portion is more depressed downward than the upper surface of the bottom surface, so that the upper surface of the double injection-molded portion and the upper surface of the bottom surface are formed to generate a step.

These technical solutions may be applied a battery module housing according to the present invention, a battery module including the same, a battery pack including the battery module, a vehicle on which the battery pack is mounted, and the like.

### Advantageous Effects

According to the present invention, interference between a vulnerable portion and a frame can be minimized by providing a cut-out portion obtained by cutting out a portion of the frame, which may interference with the vulnerable portion of each of battery cells of a battery cell stack accommodated in the frame included in a battery module housing.

According to another aspect of the present invention, by preparing the cut-out portion corresponding to the vulnerable portion, a separation distance between the frame and the battery cell stack can be reduced, so that space utilization can be maximized, and a thickness of a thermally conductive resin layer provided between the frame and the battery cell stack can be reduced, so that economic feasibility can be improved in the production of the battery module.

According to still another aspect of the present invention, the vulnerable portion can be electrically insulated from the frame by covering the cut-out portion with a double injection-molded portion made of an insulating synthetic resin, thereby improving the stability of the battery module.

According to yet another aspect of the present invention, economic feasibility in a process can be provided in that a stepped portion is prepared and insulation treatment is performed at the same time only by a double injection process, instead of a conventional process in which the stepped portion is prepared first and insulation treatment is subsequently performed through a two-step process of machining the stepped portion and attaching an insulating tape.

According to yet another aspect of the present invention, a manual process of attaching the insulating tape is replaced by an automatic process of double injection, thereby preventing a defect of the battery module due to a defect of the insulating tape.

In addition to the above effects, various other effects may be produced according to the preset disclosure, and description of the effects is provided with reference to each embodiment or description of effects predicted by one having ordinary skill in the art readily and the like are omitted.

### Description of Drawings

FIG. 1 is a perspective view illustrating an assembled state of a battery module including a U-shaped frame.
FIG. 2 is an exploded perspective view illustrating a state before the assembly of the battery module including the U-shaped frame.
FIG. 3 is a perspective view illustrating one unit of a pouch-type battery cell.
FIG. 4 is a perspective view illustrating the U-shaped frame according to one embodiment of the present invention.
FIG. 5 is an enlarged side cross-sectional view illustrating one embodiment of the present invention in which a thickness of a double injection-molded portion is less than a thickness of a bottom surface of the frame.
FIG. 6 is an enlarged side cross-sectional view illustrating one embodiment of the present invention in which the thickness of the double injection-molded portion is equal to the thickness of the bottom surface of the frame.
FIG. 7 is an enlarged side cross-sectional view illustrating one embodiment of the present invention in which the double injection-molded portion covers a portion of the bottom surface on an inner side of a boundary of a cut surface.
FIG. 8 illustrates a vehicle in which a battery pack including the battery module including an improved housing is mounted.

### [Description of Reference Numerals]

0: battery module
10: upper plate
20: end plate
1: battery cell stack
11: battery cell
11b: vulnerable portion/bat-ear
2: frame
21: bottom surface
22: cut-out portion
22m: machined surface
23: double injection-molded portion
V: vehicle
P: battery pack
X1: length direction of frame (bottom surface)
Y1: width direction of frame (bottom surface)
Z1: height direction of frame
X2: length direction of battery cell
Y2: width direction of battery cell
Z2: height direction of battery cell (normal line direction)

### Modes of the Invention

The above-described aspects, features and advantages are specifically described hereafter with reference to the accompanying drawings such that one having ordinary skill in the art to which the present invention pertains can embody the technical spirit of the disclosure easily. In the disclosure, detailed description of known technologies in relation to the subject matter of disclosure is omitted if it is deemed to make the gist of the disclosure unnecessarily vague. Hereafter, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component can be a second component, unless stated to the contrary.

Throughout the disclosure, each component can be provided as a single one or a plurality of ones, unless explicitly stated to the contrary.

When any one component is described as being "in the upper portion (or lower portion)" or "on (or under)" another component, any one component can be directly on (or under) another component, but an additional component can be interposed between any one component and another component on (or under) any one component.

When any one component is described as being "connected", "coupled", or "connected" to another component, any one component can be directly connected or coupled to another component, but an additional component can be "interposed" between the two components or the two components can be "connected", "coupled", or "connected" by an additional component.

The singular forms "a", "an" and "the" are intended to include the plural forms as well, unless explicitly indicated otherwise. It is to be understood that the terms "comprise" or "include" and the like, set forth herein, are not interpreted as necessarily including all the stated components or steps but can be interpreted as excluding some of the stated components or steps or can be interpreted as including additional components or steps.

Throughout the disclosure, the phrase "A and/or B" as used herein can denote A, B or A and B, and the phrase "C to D" can denote C or greater and D or less, unless stated to the contrary.

For convenience of description, in the present specification, with respect to a battery module, a direction passing through both end plates of the battery module and parallel to a bottom surface of a frame is referred to as a length direction X1, a direction normal to a plane formed by each of battery cells included in a battery cell stack and parallel to the bottom surface of the frame is referred to as a width direction Y1, and a normal line direction of the bottom surface of the frame is referred to as a height direction Z1.

In addition, in the present specification, with respect to the battery cell, a direction passing through both electrode leads and parallel to the battery cell is referred to as a length direction X2, a direction perpendicular to the length direction and parallel to the battery cell is referred to as a width direction Y2, and a direction corresponding to the normal line direction of the battery cell is referred to as a normal line direction or a height direction Z2.

Hereinafter, exemplary embodiment of the present invention will be described with reference to the accompanying drawings.

FIGS. 1 and 2 are a perspective view and an exploded perspective view, illustrating a battery module 0 having a U-shaped frame 2, whose upper portion and front and rear surfaces are open, after and before assembly, respectively. Referring to these drawings, the battery module 0 having the U-shaped frame 2 may include a battery cell stack 1 configured by stacking battery cells 11, and a housing configured to accommodate the battery cell stack 1, and the housing may include a frame 2 configured to cover a lower portion and both sides thereof in the width direction Y1, an upper plate 10 configured to cover an upper portion thereof, and a pair of end plates 20 configured to cover both sides thereof in the length direction X1.

The frame 2 may have a U-shape in which a bottom surface 21 and both sidewalls in the width direction are connected. The U-shaped frame 2 may be formed by bonding a plate forming the bottom surface 21 and a plate forming each of the both sidewalls, or may be formed of one plate bent at both corner portions at which the bottom surface 21 and the both sidewalls meet.

The frame 2 may be made of a metal plate and may be manufactured by plastically deforming the metal plate through a press. However, any material that can have the U-shape as described above can be used regardless of the material and manufacturing process.

The frame 2 may be assembled together with the end plates 20 and the upper plate 10 to form the housing. The assembly may be performed by joining such as welding or by other methods such as friction fit or bolt fastening.

Meanwhile, the battery cell stack 1 is an assembly in which a plurality of pouch-type battery cells 11 are stacked and assembled, and may include bus bars to which electrode leads (there are a positive electrode lead and a negative electrode lead) extending to protrude to the outside of the battery cells 11 are connected with the same polarity as each other or different polarities from each other. The bus bars are electrically connected to the end plates 20, respectively, to allow the battery cell stack 1 to be electrically connected to the outside.

The battery cell stack 1 may be accommodated in the housing such that the normal line direction Z2 of each of the battery cells 11 matches the width direction of the housing. At this time, the battery cell stack 1 may be accommodated in the housing such that vulnerable portions 11b of the battery cells 11, which will be described below, face the bottom surface 21 of the frame 2 in the width direction.

FIG. 3 is a perspective view illustrating one unit of the pouch-type battery cell 11. Referring to this, the battery cell 11 has a structure in which an electrode assembly, an electrode tab, and an electrode lead are accommodated in a pouch mainly made of a material in which both surfaces of a metal sheet are coated with an insulating material, and the electrode lead partially extends to protrude to the outside of the pouch.

The electrode assembly has a structure in which a positive electrode plate and a negative electrode plate are stacked a plurality of times with a separator interposed therebetween. The electrode tabs may be configured by extending and protruding from the positive electrode plate and the negative electrode plate and overlapping each other with the same polarity. The electrode lead is welded and electrically connected to the electrode tab, and a portion of the electrode lead extends to protrude in the length direction X2 to the outside of a lead film surrounding the electrode lead and the pouch, which is thermally fused on the lead film, and thus the electrode assembly may be electrically connected to the outside.

The pouch is formed of a metal sheet coated with an insulating material, and the shape of the pouch is formed by folding a metal sheet, which has a symmetrical rectangular shape, in half around a symmetrical axis thereof (becomes one end portion in the width direction after being folded) and thermally fusing and sealing the remaining three sides except for the folded portion. At this time, both corner portions between the folded portion of one end portion in the width direction and both end portions in the length direction adjacent thereto are compressed in the sealing process to form the vulnerable portion (bat-ear) 11b having a shape protruding from the corner portion to one side in the width direction. Since the vulnerable portion 11b has a protruding shape, the vulnerable portion 11b may interfere with the frame 2. When such interference occurs, it may result in poor sealing and/or insulating performance of the vulnerable portion 11b.

Meanwhile, a thermally conductive resin layer may be provided between the battery cell stack 1 and the frame 2 for a cooling action for the battery cell stack 1. The cooling action refers to an action by which the thermally conductive resin layer between the battery cell stack 1 and the frame 2 conducts heat generated by the battery cell stack 1 to the frame 2 to easily discharge the heat to the outside in order to prevent battery performance degradation caused by a separation space between the battery cell stack 1 and the frame 2 acting as a thermal insulator and not effectively discharging the heat generated in the battery cell stack 1 to the outside of the battery module. In this case, the thermally conductive resin layer inevitably becomes thicker as the separation space increases, and thus economic feasibility of production is reduced. However, when the battery cell stack 1 is accommodated in the frame 2 having a flat inner surface, due to the protruding shape of the vulnerable portion 11b, a separation distance between the battery cell stack 1 and the frame 2 is excessively increased in the remaining portions except for the protruding portion of the vulnerable portion 11b, and thus spatial utilization may be reduced and the thermally conductive resin layer may be excessively thick.

Accordingly, the present invention provides a battery module housing having a structure, in which a cut-out portion 22, which is formed by cutting out a portion at which interference is likely to occur with the protruding end portion of the vulnerable portion 11b, is provided in the frame 2, and a double injection-molded portion 23 covers the cut-out portion 22.

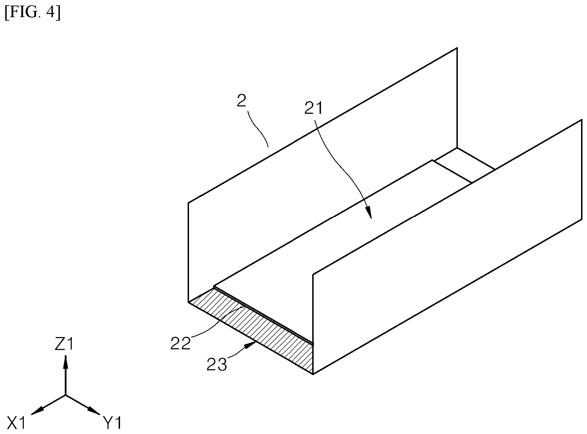

FIG. 4 is a perspective view illustrating the U-shaped frame 2 according to one embodiment of the present invention. Referring to this, in the U-shaped frame 2, the portion at which interference occurs with the end portion of the vulnerable portion 11b is cut out to form the cut-out portion 22, and the double injection-molded portion 23 formed by double injection of a synthetic resin covers the cut-out portion 22.

The cut-out portion 22 may be formed later by cutting and machining the existing frame 2 through a press, and may be formed in advance in a process of cutting a metal plate plastically deformed in the shape of the frame 2 through a press. The formation method of the cut-out portion 22 can vary as long as it is shaped such that a portion of the frame 2 is cut out to avoid interference between the vulnerable portion 11b and the frame 2.

The cut-out portion may be formed on the bottom surface 21 of the frame 2. For example, the cut-out portion 22 may be formed at one end portion of the bottom surface 21 of the frame 2 in the length direction. Alternatively, the cut-out portion 22 may be formed on the sidewall of the frame 2. The position of the cut-out portion 22 can be anywhere as long as the position may interfere with the vulnerable portion 11b. For example, the position of the cut-out portion 22 may be an edge portion of the frame 2 or an inner side of one surface of the frame 2.

The cut-out portion 22 may be formed in a shape recessed into the bottom surface 21 or an inner side surface of the frame 2, leaving a portion of the thickness thereof, or may also be formed to completely penetrate the formed surface. For example, the cut-out portion 22 may be formed by partially cutting out one end portion or both end portions of the bottom surface 21 of the frame 2 in the length direction so as to completely pass therethrough. By trimming with a press or the like, it is possible to form the cut-out portion 22 in such a form that completely penetrates the frame 2 at a low cost.

The cut-out portion 22 may be formed on the bottom surface 21 of the frame 2 with both corners at which the bottom surface 21 and both sidewalls in the width direction meet as boundaries thereof in the width direction.

The double injection-molded portion 23 may be made of a synthetic resin, and may be formed through double injection to be connected to a machined surface 22m of the cut-out portion 22, and cover the cut-out portion 22. The term "cover" may mean that the double injection-molded portion 23 fills a space of the cut-out portion 22 generated as an inner surface of the frame 2 is recessed or penetrated to the outside to constitute a portion of an inner wall of the frame 2.

The double injection-molded portion 23 may extend to protrude to the outside in addition to covering the cut-out portion 22. For example, the double injection-molded portion 23 may cover the cut-out portion 22 formed at one end portion of the bottom surface 21 of the frame 2 in the length direction and may also extend to protrude more than the sidewall of the frame 2 in the length direction.

The double injection-molded portion 23 may not entirely cover the recessed or penetrated space of the cut-out portion 22, and may have a shape recessed or penetrated at one end portion thereof. The recessed or penetrated portion of the double injection-molded portion 23 may be formed such that a corresponding portion of another member, such as the end plate 20, may cover the same.

The double injection-molded portion 23 may have a shape depressed more than the inner surface of the frame 2 on which the cut-out portion 22 is formed. The term "depressed" may mean that a depth is formed relative to the inner surface of the frame 2 other than the cut-out portion 22 among the surface on which the cut-out portion 22 is formed. For example, the depressed portion may be in the same shape as a groove or a stepped portion. As the depressed shape is provided, a phenomenon in which the vulnerable portion 11b of the battery cell 11 causes interference with the double injection-molded portion 23 even though the double injection-molded portion 23 covers the cut-out portion 22 may be prevented.

The degree of depression of the double inj ection-molded portion 23 may be determined so as to form a step corresponding to the degree of protrusion of the vulnerable portion 11b. As the double injection-molded portion 23 is depressed relative to the inner surface of the frame 2 as much as the vulnerable portion 11b protrudes, the separation distance between the battery cell stack 1 and the frame 2 may be reduced, and accordingly, the thermally conductive resin layer can be thinned to become economical, or the heat generated by the battery cell stack 1 can be easily conducted to the frame 2 and discharged to the outside even without having the thermally conductive resin layer.

The depressed shape or the step may be formed along the machined surface 22m of the cut-out portion 22 in the width direction and/or the length direction. For example, as in an embodiment to be described below, the double injection-molded portion 23 may have a shape depressed more than the bottom surface 21 with respect to a boundary of the cut-out portion 22 in the width direction and a boundary of the cut-out portion 22 in the length direction.

The double injection-molded portion 23 may be made of an insulating synthetic resin. In this case, even when the sealing or insulation of the vulnerable portion 11b deteriorates or the interference between the vulnerable portion 11b and the double injection-molded portion 23 occurs, the insulation can be maintained due to the insulating nature of the double injection-molded portion 23.

The double injection-molded portion 23 is made of a thermally conductive synthetic resin or may be made of a thermally conductive synthetic resin that is also an insulating synthetic resin. In this case, the heat generated from the battery cell stack 1 may also be conducted to the double injection-molded portion 23 to be easily discharged to the outside.

In the embodiment, the double injection-molded portion 23 is exemplified as being manufactured through double injection, but it is also possible to form the double injection-molded portion 23 by insert injection or the like. That is, the double injection-molded portion itself does not limit that the manufacturing method of the corresponding component should be double injection.

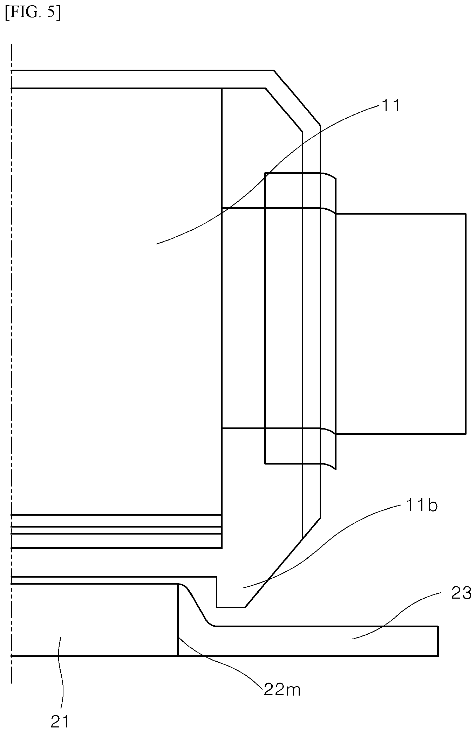

FIG. 5 is an enlarged side cross-sectional view illustrating one embodiment of the present invention. Referring to this, the double injection-molded portion 23 may have a shape depressed more than the bottom surface 21 by being formed with a thickness less than that of the bottom surface 21 of the frame 2. At this time, a lower surface of the bottom surface 21 and a lower surface of the double injection-molded portion 23 may be continuous without a step. In this case, the frame 2 may maintain a stable structure when placed on a flat floor. Although FIG. 5 illustrates only a side surface, that is, only a cross section of the frame 2 in the width direction, when the machined surface 22m of the cut-out portion 22 is also formed in the length direction, a front surface, that is, a cross section of the frame 2 in the length direction is the same as described above.

For example, the housing according to one embodiment of the present invention with reference to FIGS. 4 and 5 includes a U-shaped frame 2 formed by plastic deformation of a metal plate, the cut-out portion 22 is formed at one end portion of the frame 2 in the length direction with both corners at which the bottom surface 21 and both sidewalls meet as boundaries thereof in the width direction to penetrate the bottom surface 21, the double injection-molded portion 23 is connected to the machined surface 22m of the cut-out portion 22, and the thickness of the double injection-molded portion 23 is less than the thickness of the bottom surface 21. The lower surface of the double injection-molded portion 23 and the lower surface of the bottom surface 21 have the same height and are continuous without a step, and the upper surface of the double injection-molded portion 23 is more depressed downward than the upper surface of the bottom surface 21, so that the upper surface of the double injection-molded portion 23 and the upper surface of the bottom surface 21 are formed to generate a step equal to the degree of protrusion of the vulnerable portion 11b of the battery cell 11.

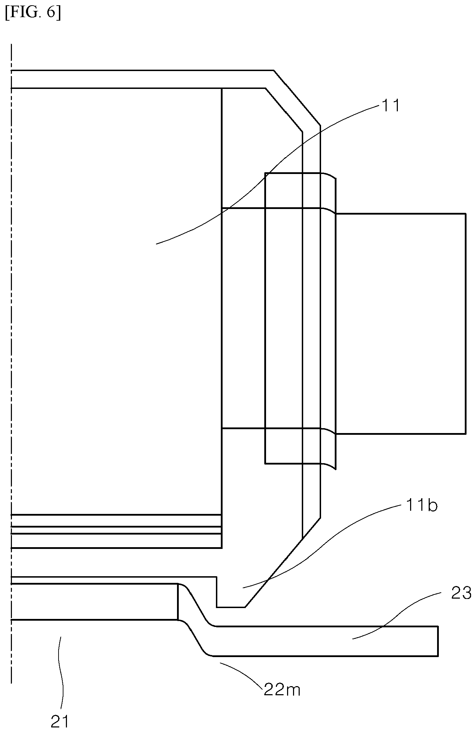

FIG. 6 is an enlarged side cross-sectional view illustrating another embodiment of the present invention. Referring to this, the double injection-molded portion 23 may be formed such that a thickness thereof is equal to a thickness of the bottom surface 21 of the frame 2, but the double injection-molded portion 23 itself protrudes downward relative to the bottom surface 21, so that an upper surface of the double injection-molded portion 23 has a negative step with respect to an upper surface of the bottom surface 21, and a lower surface of the double injection-molded portion 23 has a positive step with respect to a lower surface of the bottom surface 21. The negative or positive step means that the upper surface or the lower surface of the double injection-molded portion 23 is depressed or protrudes compared to the upper surface or the lower surface of the bottom surface 21. In this way, the double injection-molded portion 23 or the bottom surface 21 may form a depressed shape in which the interference does not occur, without being unnecessarily thickened or thinned to the point of being unable to maintain a strength thereof. Although FIG. 6 illustrates only a side surface, that is, only a cross section of the frame 2 in the width direction, when the machined surface 22m of the cut-out portion 22 is also formed in the length direction, a front surface, that is, a cross section of the frame 2 in the length direction is the same as described above.

For example, the housing according to one embodiment of the present invention with reference to FIGS. 4 and 6 includes a U-shaped frame 2 formed by plastic deformation of a metal plate, the cut-out portion 22 is formed at one end portion of the frame 2 in the length direction with both corners at which the bottom surface 21 and both sidewalls meet as boundaries thereof in the width direction to penetrate the bottom surface 21, the double injection-molded portion 23 is connected to the machined surface of the cut-out portion 22, and the thickness of the double injection-molded portion 23 is equal to the thickness of the bottom surface 21. The entire double injection-molded portion 23 more protrudes downward than the bottom surface 21, so that the double injection-molded portion 23 and both the upper and lower surfaces of the bottom surface 21 form a step equal to the degree of protrusion of the vulnerable portion 11b of the battery cell 11.

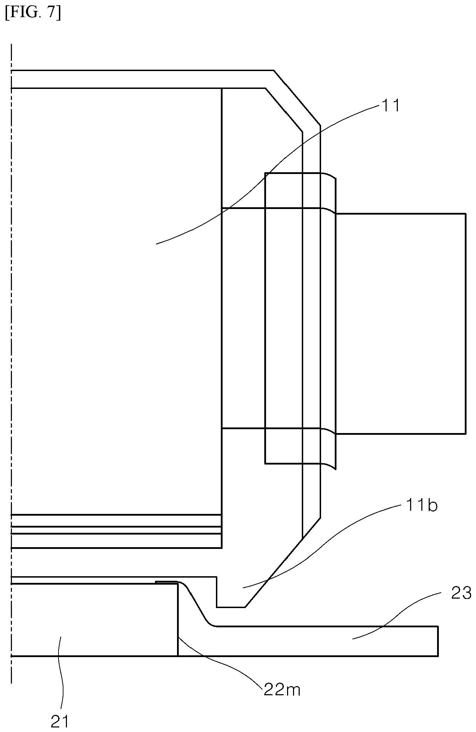

FIG. 7 is an enlarged side cross-sectional view illustrating still another embodiment of the present invention. Referring to this, the double injection-molded portion 23 may, in addition to covering the cut-out portion 22, cover a portion of the bottom surface 21 inside the boundary of the cut-out portion 22. Accordingly, it is possible to prevent the insulation or sealing of the battery cell 11 from being damaged by generating a sharp stepped portion at a boundary portion of a portion in which the depression occurs, and to prevent insulating performance degradation that may occur. Although FIG. 7 illustrates only a side surface, that is, only a cross section of the frame 2 in the width direction, when the machined surface 22m of the cut-out portion 22 is also formed in the length direction, a front surface, that is, a cross section of the frame 2 in the length direction is the same as described above.

For example, the housing according to one embodiment of the present invention with reference to FIGS. 4 and 7 includes a U-shaped frame 2 formed by plastic deformation of a metal plate, the cut-out portion 22 is formed at one end portion of the frame 2 in the length direction with both corners, at which the bottom surface 21 and both sidewalls meet, as boundaries thereof in the width direction to penetrate the bottom surface 21, the double injection-molded portion 23 is connected to the machined surface 22m of the cut-out portion 22 and a portion of the bottom surface 21 inside the boundary of the cut-out portion 22, and the thickness of the double injection-molded portion 23 is less than the thickness of the bottom surface 21. The lower surface of the double injection-molded portion 23 and the lower surface of the bottom surface 21 have the same height and are continuous without a step, and the upper surface of the double injection-molded portion 23 is more depressed downward than the upper surface of the bottom surface 21, so that the upper surface of the double injection-molded portion 23 and the upper surface of the bottom surface 21 are formed to generate a step equal to the degree of protrusion of the vulnerable portion 11b of the battery cell 11.

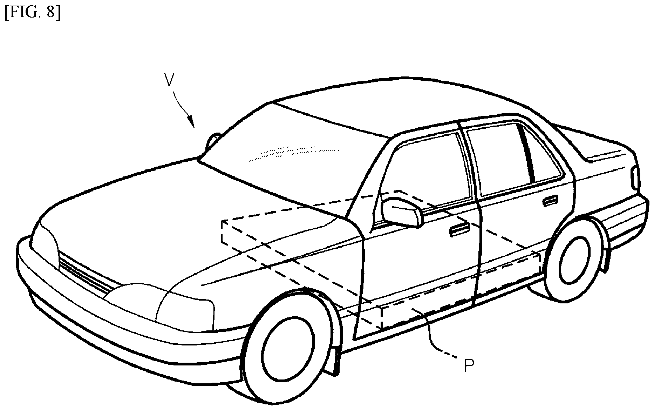

FIG. 8 illustrates a vehicle V in which a battery pack P including a battery module including the improved housing is mounted. It should be appreciated that the present invention may provide a battery module including the housing disclosed above, the battery pack P including the battery module, and the vehicle V mounting the battery pack P. The method for manufacturing the battery pack P and the vehicle V is known to a person skilled in the art, and thus a description thereof will be omitted.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

The embodiments are described above with reference to a number of illustrative embodiments thereof. However, embodiments are not limited to the embodiments and drawings set forth herein, and numerous other modifications and embodiments may be drawn by one skilled in the art within the technical scope of the disclosure. Further, the effects and predictable effects based on the configurations in the disclosure are to be included within the scope of the disclosure though not explicitly described in the description of the embodiments.

## Claims

1. A housing configured to accommodate a battery cell stack, the housing comprising:
a frame configured to accommodate the battery cell stack;
a cut-out portion formed by cutting out a portion of the frame, which interferes with an end portion of a vulnerable portion formed to protrude from one side of each of battery cells of the battery cell stack in a width direction; and
a double injection-molded portion connected to the cut-out portion.

2. The housing of claim 1, wherein the frame is made of a metal plate, and
the double injection-molded portion is made of an insulating synthetic resin.

3. The housing of claim 2, wherein the insulating synthetic resin is also a thermally conductive synthetic resin.

4. The housing of one of claims 1 to 3, wherein the frame is provided in a U-shape whose upper portion and both sides in a length direction are open, and
the cut-out portion is formed at one end portion of a bottom surface of the frame in the length direction and has a shape recessed in the bottom surface with both corners, at which both sidewalls and the bottom surface of the frame meet, as boundaries thereof in the width direction.

5. The housing of claim 4, wherein the double injection-molded portion is continuous with at least a portion of a machined surface of the cut-out portion, replaces the recessed bottom surface of the frame, and constitutes a portion of the bottom surface.

6. The housing of claim 5, wherein a height of a bottom surface of the double injection-molded portion is recessed compared to a height of the bottom surface of the frame to form a step.

7. The housing of claim 6, wherein the double injection-molded portion extends to protrude from the frame in the length direction.

8. The housing of claim 6, wherein a thickness of the double injection-molded portion in a height direction is equal to a thickness of the bottom surface of the frame in the height direction, and
a lower surface of the double injection-molded portion is formed to protrude more downward than a lower surface of the frame.

9. The housing of claim 6, wherein a thickness of the double injection-molded portion in a height direction is less than a thickness of the bottom surface of the frame in the height direction, and
a lower surface of the double injection-molded portion is formed to be continuous with a lower surface of the frame at the same height.

10. The housing of claim 6, wherein the double injection-molded portion covers up to a portion of a bottom surface inside a boundary surface of the cut-out portion.

11. The housing of one of claims 1 to 3, wherein the frame is provided in a U-shape whose upper portion and both sides in a length direction are open,
the cut-out portion is formed at one end portion of a bottom surface of the frame in the length direction and formed to completely penetrate the bottom surface with both corners, at which both sidewalls and the bottom surface of the frame meet, as boundaries thereof in the width direction, and
the double injection-molded portion is formed to cover an area through which the bottom surface is penetrated.

12. The housing of claim 11, wherein a height of a bottom surface of the double injection-molded portion is recessed compared to a height of the bottom surface of the frame to form a step.

13. The housing of claim 12, wherein the double injection-molded portion extends to protrude from the frame in the length direction.

14. The housing of claim 12, wherein a thickness of the double injection-molded portion in a height direction is equal to a thickness of the bottom surface of the frame in the height direction, and
a lower surface of the double injection-molded portion is formed to protrude more downward than a lower surface of the frame.

15. The housing of claim 12, wherein a thickness of the double injection-molded portion in a height direction is less than a thickness of the bottom surface of the frame in the height direction, and
a lower surface of the double injection-molded portion is formed to be continuous with a lower surface of the frame at the same height.

16. The housing of claim 12, wherein the double injection-molded portion covers up to a portion of a bottom surface inside a boundary surface of the cut-out portion.

17. A battery module comprising:
a battery cell stack in which battery cells each having a vulnerable portion are stacked; and
a housing configured to accommodate the battery cell stack,
wherein the housing includes:
a frame configured to accommodate the battery cell stack;
a cut-out portion formed by cutting out a portion of the frame, which interferes with an end portion of the vulnerable portion formed to protrude from one side of each of the battery cells of the battery cell stack in a width direction; and
a double injection-molded portion connected to the cut-out portion.

18. The battery module of claim 17, wherein the cut-out portion is formed to completely penetrate a portion of the frame, and
the double injection-molded portion is formed to cover an area through which the portion of the frame is penetrated.

19. The battery module of claim 17, wherein an inner surface of the double injection-molded portion includes a surface that is more depressed than an inner surface of the frame in which the cut-out portion is provided.

20. The battery module of claim 17, wherein the frame includes both sidewalls disposed to be spaced apart from each other in a width direction, and a bottom surface connecting lower end portions of the both sidewalls in the width direction, and
the cut-out portion is disposed at one end portion of the bottom surface in a length direction.

21. The battery module of claim 20, wherein the cut-out portion provides a portion in which one end portion of the bottom surface of the frame in the length direction is more depressed inward than one end portions of the both sidewalls in the length direction.

22. The battery module of claim 17, wherein the double injection-molded portion covers up to a portion of a bottom surface inside a boundary surface of the cut-out portion.

23. A battery pack comprising the battery module of any one of claims 17 to 22.

24. A vehicle in which the battery pack of claim 23 is mounted.
